Europäisches Patentamt

European Patent Office

Office européen des brevets

(11) Numéro de publication : **0 320 337 B1**

# FASCICULE DE BREVET EUROPEEN

(45) Date de publication du fascicule du brevet :
26.02.92 Bulletin 92/09

(51) Int. Cl.⁵ : **A21B 5/02**

(21) Numéro de dépôt : **88403005.7**

(22) Date de dépôt : **29.11.88**

(54) **Appareil de cuisson de plats de faible épaisseur tels que des omelettes, des quiches ou analogues.**

(30) Priorité : **01.12.87 FR 8716655**

(43) Date de publication de la demande :
**14.06.89 Bulletin 89/24**

(45) Mention de la délivrance du brevet :
**26.02.92 Bulletin 92/09**

(84) Etats contractants désignés :
**AT BE CH DE ES GB IT LI LU NL SE**

(56) Documents cités :
**FR-A- 2 315 819**
**FR-A- 2 481 042**
**GB-A- 758 898**
**US-A- 3 097 588**

(73) Titulaire : **ELECTRICITE DE FRANCE Service National**
**2, rue Louis Murat**
**F-75008 Paris (FR)**

(72) Inventeur : **Nuns, Jacques**
**Rue de Chateau d'eau Ecuelles**
**F-77250 Moret S/Loing (FR)**
Inventeur : **Girault, Alain**
**7 rue du Paradis Ecuelles**
**F-77250 Moret S/Loing (FR)**

(74) Mandataire : **Obolensky, Michel et al**
**c/o CABINET LAVOIX 2, place d'Estienne d'Orves**
**F-75441 Paris Cédex 09 (FR)**

## Description

La présente invention est relative aux appareils de cuisson de plats cuisinés et se rapporte plus particulièrement aux appareils de cuisson de plats de faible épaisseur tels qu'omelettes, quiches, pizzas ou analogues, destinés à être utilisée pour la restauration à grand débit, par exemple les cantines scolaires, les restaurants d'entreprise ou autres.

Dans les restaurants à grand débit, du type précité, il est nécessaire de satisfaire une clientèle nombreuse, qui prend généralement un menu imposé, de sorte que l'on doit confectionner le même plat à une cadence accélérée en fonction des pointes de fréquentation du restaurant.

Pour la confection de plats tels que des omelettes, des quiches ou analogues, les installations de cuisson même pourvues d'un grand nombre de "feux" ne permettent pas d'assurer un débit suffisant dans la mesure où lorsque tous les feux sont occupés, il est nécessaire d'attendre que tous les plats soient cuits pour les retirer et les remplacer par un lot de plats suivants.

Le besoin se fait donc sentir de disposer pour des restaurants à grand débit d'un appareil de cuisson qui soit capable d'offrir à la clientèle de façon ininterrompue des plats cuits à point et chauds.

Le brevet américain US-A-3 097 588 décrit une machine pour la cuisson de crêpes ou analogues qui comporte un transporteur sans fin constitué par un convoyeur à chaînes 6. Des plaques chaudes transversales 7 sont disposées côte à côte et fixées à leurs extrémités sur les chaînes du convoyeur. Ces plaques chaudes peuvent être chauffées par des moyens de chauffage constitués par des rampes de brûleurs à gaz qui chauffent la face inférieure des plaques chaudes.

Cet appareil connu ne permet pas d'obtenir un chauffage homogène des crêpes placées sur les plaques.

La présente invention vise à créer un appareil de cuisson qui permette d'obtenir une répartition homogène du chauffage des plats.

Elle a donc pour objet un appareil de cuisson de plats de faible épaisseur tels des des omelettes, des quiches ou analogues, comportant un transporteur sans fin, sur lequel sont montés à intervalles réguliers des récipients en métal destinés à recevoir des portions séparées dudit plat, et des moyens de chauffage desdits récipients, caractérisé en ce que le transporteur sans fin est en matière isolante susceptible de supporter des températures d'environ 200 degrés, en ce que lesdits moyens de chauffage sont constitués par des inducteurs disposés au-dessous du brin supérieur dudit transporteur, lesdits inducteurs ayant un diamètre à peu près égal à la moitié du diamètre des récipients et étant disposés en au moins deux rangées dans la direction de déplacement du transporteur symétriquement par rapport à l'axe médian des récipients dans la direction de déplacement du transporteur, les bords voisins de rangées des inducteur se trouvant au-delà d'un plan vertical contenant ledit axe de déplacement des récipients, de manière à assurer un chauffage homogène desdits récipients.

L'invention sera mieux comprise à l'aide de la description qui va suivre, donnée uniquement à titre d'exemple et faite en se référant aux dessins annexés, sur lesquels :

– la Fig. 1 est une vue schématique en élévation d'un appareil de cuisson suivant l'invention;

– la Fig. 2 est une vue en coupe à plus grande échelle montrant un détail de l'appareil de cuisson de la Fig.1;

– la Fig. 3 est une vue partielle en plan à plus grande échelle montrant la disposition relative des inducteurs par rapport aux récipients de l'appareil de cuisson de la Fig. 1; et

– la Fig. 4 est une vue schématique partielle du branchement électrique des inducteurs de l'appareil de cuisson suivant l'invention.

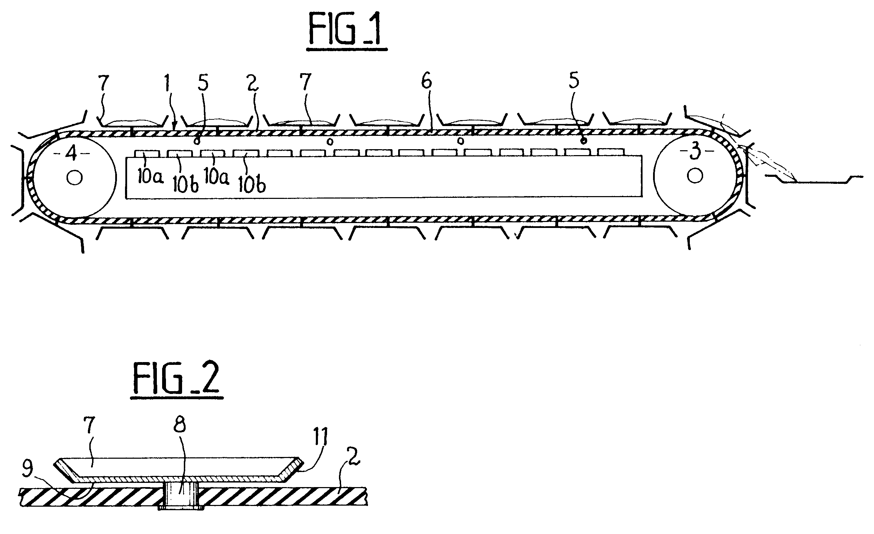

L'appareil de cuisson représenté à la Fig. 1 est destiné comme indiqué plus haut à la cuisson de plats de faible épaisseur, tels que des omelettes, des quiches, des pizzas ou analogues.

Il comporte principalement un transporteur sans fin 1 comportant un ruban 2 en une matière isolante susceptible de supporter des températures pouvant atteindre environ 200°C, monté entre un rouleau menant 3 entraîné par un moteur électrique non représenté et un rouleau mené 4, des galets de soutien 5 étant interposés entre les rouleaux 3 et 4 pour soutenir le brin supérieur 6 du ruban transporteur 2.

Sur le ruban transporteur 2 sont disposés à intervalles réguliers, des récipients 7 destinés à recevoir des portions individuelles des plats à cuisiner, et qui dans le présent exemple sont avantageusement constitués par des poêles revêtues intérieurement de matière anti-adhérente et pourvues chacune, comme représenté à la Fig.2, d'une colonnette centrale 8 solidaire de leur fond et traversant la matière du ruban transporteur 2 pour assurer la fixation de la poêle 7 sur ledit ruban 2, par exemple par sertissage ou analogue, de manière qu'un intervalle 9 soit laissé entre le fond de la poêle 2 et le ruban transporteur afin d'éviter un échauffement excessif de la matière de celui-ci.

Au-dessous du brin supérieur 6 du ruban transporteur, sont montés, entre les rouleaux menant et mené 3 et 4, des inducteurs électriques 10a, 10b, disposés dans le présent exemple en deux rangées parallèles à la direction de déplacement du ruban transporteur 2.

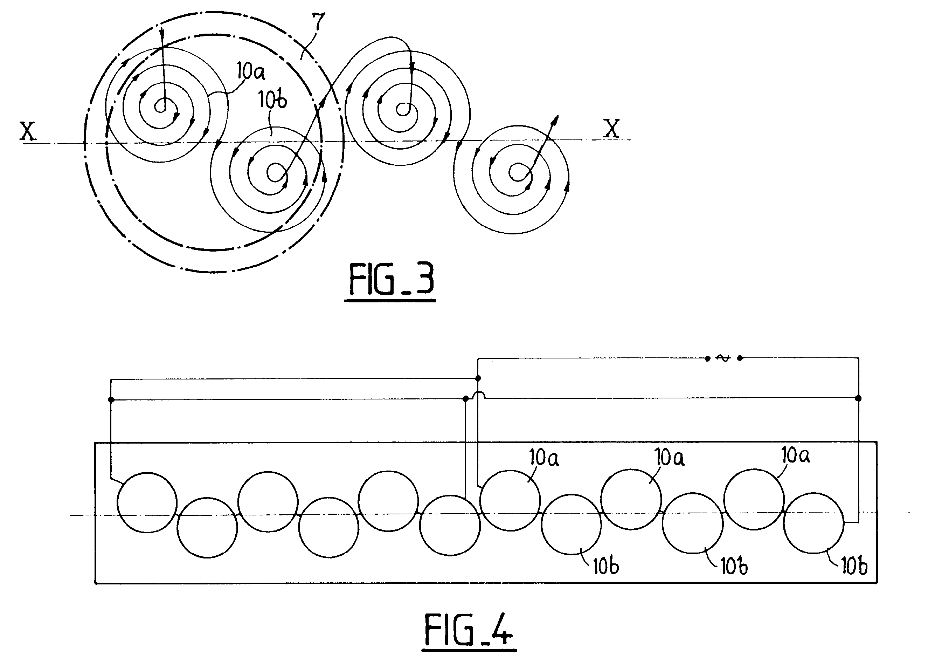

Comme le montre la Fig.3, les inducteurs 10a et 10b des deux rangées précitées, sont des inducteurs en spirale, de forme générale circulaire et dont les diamètres sont égaux à peu près à la moitié du diamètre du fond des poêles 7 qui sont déplacées au-dessus des ces inducteurs sur le ruban transporteur 2.

Les inducteurs 10a et 10b des deux rangées sont disposés symétriquement par rapport à l'axe X-X de déplacement des poêles 7, une de ces poêles étant représentée en trait mixte sur la Fig.3.

Les bords intérieurs des inducteurs 10a et 10b font saillie au-delà du plan vertical contenant l'axe X-X de déplacement des poêles, de manière à assurer un chauffage pratiquement homogène desdites poêles 7 au cours de leur déplacement par le ruban transporteur 2.

Le réglage du chauffage obtenu par l'appareil peut être assuré en adaptant la distance entre les inducteurs 10a, 10b des deux rangées en fonction du diamètre des récipients à chauffer.

Pour plus d'efficacité, étant donné que les inducteurs 10a, 10b sont rapprochés les uns des autres, ils sont connectés de façon que les courants circulant dans deux inducteurs voisins ne se contrarient pas, c'est à dire que le courant d'alimentation circule en sens inverse dans deux inducteurs voisins.

Le sens du courant dans les inducteurs voisins est matérialisé par les flèches sur la Fig.3 sur laquelle on voit que les flèches des portions voisines des spires de deux inducteurs voisins ont le même sens.

La Fig.4 représente un mode de connexion électrique des inducteurs de l'appareil suivant l'invention.

Dans cet exemple, les inducteurs matérialisés par des cercles, sont connectés en série par groupe de six, les groupes successifs des six inducteurs 10a, 10b en série, étant connectés en parallèle a une source de tension alternative d'alimentation.

En revenant à nouveau sur la Fig.2, on voit que chacune des poêles 7 est revêtue sur la surface exérieure de son rebord, d'une couche 11 de brasure en un matériau bon conducteur de l'électricité destiné à éviter que la poêle 7 ne subisse un échauffement excessif lorsque son rebord avant dans le sens du déplacement du ruban transporteur 2 aborde un inducteur 10a, car alors les courants induits par l'inducteur se referment sur une région de faible surface de la poêle, ou bien lorsque le rebord arrière de ladite poêle 7 quitte un inducteur 10b, ce qui entraîne un excès d'échauffement localisé pour les mêmes raisons.

Ce revêtement bon conducteur peut être constitué par exemple par une brasure à l'argent revêtant la surface extérieure du bord de la poêle.

Le ruban transporteur 2 est avantageusement déplacé avec une vitesse de 10m/mn et les inducteurs sont disposés sur une étendue d'environ 25 m, ce qui permet la cuisson d'une omelette pendant environ 2 mn 30 au cours de son déplacement le long du transporteur.

Bien entendu, la vitesse de déplacement du ruban transporteur peut être adaptée au temps de cuisson nécessaire pour le plat à confectionner.

La matière crue destinée à constituer le plat est placée sur la poêle à un poste de chargement disposé à une extrémité d'entrée du transporteur, la cuisson du plat a lieu sur la poêle 7 pendant le trajet de celle-ci entre l'extrémité d'entrée et l'extrémité de sortie du transporteur et lorsque la poêle arrive à proximité du rouleau menant 3, son basculement autour dudit rouleau provoque simultanément le transfert de son contenu cuit dans une assiette ou analogue disposée de façon appropriée à cet effet.

Les poêles étant revêtues intérieurement d'une matière anti-adhérente, elles sont ramenées vers le poste de chargement situé à proximité du rouleau mené 4 sans qu'il soit nécessaire, de procéder à leur nettoyage, au moins pendant une utilisation de quelques heures, correspondant à la période de confection des plats au cours d'une journée de restauration.

Le fait que les inducteurs 10a, 10b soient disposés de part et d'autre du diamètre de la trace de chaque poêle, parallèle à la direction de déplacement du ruban transporteur et que les surfaces de ces inducteurs coupent ce diamètre de manière à obtenir un recouvrement, permet d'obtenir une répartition homogène du chauffage des poêles 7 par les inducteurs 10a, 10b.

L'agencement qui vient d'être décrit permet donc d'obtenir la cuisson ininterrompue de plats de faible épaisseur, tels que des omelettes, des quiches ou analogues et ceci avec un débit adapté aux exigences d'un restaurant, destiné à offrir ses services à une clientèle nombreuse et disposant d'un temps limité pour prendre son repas.

**Revendications**

1. Appareil de cuisson de plats de faible épaisseur tels des des omelettes, des quiches ou analogues, comportant un transporteur sans fin (2), sur lequel sont montés à intervalles réguliers des récipients en métal destinés à recevoir des portions séparées dudit plat, et des moyens de chauffage desdits récipients, caractérisé en ce que le transporteur sans fin (2) est en matière isolante susceptible de supporter des températures d'environ 200 degrés, en ce que lesdits moyens de chauffage sont constitués par des inducteurs (10a,10b) disposés au-dessous du brin supérieur (6) dudit transporteur, lesdits inducteurs ayant un diamètre à peu près égal à la moitié du diamètre des récipients et étant disposés en au moins deux rangées dans la direction de déplacement du transporteur (2) symétriquement par rapport à l'axe médian des récipients (X-X) dans la direction de déplacement du transporteur, les bords voisins de rangées des inducteur (10a,10b) se trouvant au-delà d'un plan vertical contenant ledit axe médian des récipients (7), de manière à assurer un chauffage homogène desdits récipients.

2. Appareil suivant la revendication 1, caractérisé en ce que ledit transporteur comporte un ruban et en ce que lesdits récipients (7) sont constitués par des poêles fixées par leur fond au ruban transporteur (2) au moyen de colonnettes (8) solidaires chacune du fond d'une poêle et tranversant la matière dudit ruban transporteur (2), un intervalle (9) étant prévu entre le fond de chaque poêle (7) et la surface du ruban transporteur (2).

3. Appareil suivant l'une des revendications 1 et 2, caractérisé en ce que chacun des récipients est muni sur son rebord d'un revêtement extérieur (11) bon conducteur de l'électricité.

4. Appareil suivant la revendication 3, caractérisé en ce que ledit revêtement (11) bon conducteur de l'électricité est une brasure à l'argent.

5. Appareil suivant l'une des revendications 1 à 4, caractérisé en ce que les inducteurs (10a,10b) sont connectés en série par groupes, et en ce que les groupes d'inducteurs (10a,10b) connectés en série sont branches en parallèle à une source de tension alternative d'alimentation.

6. Appareil suivant l'une quelconque des revendications 2 à 5, caractérisé en ce que le ruban transporteur (2) est réalisé en un matériau souple résistant aux températures élevées de l'ordre de 200°C.

7. Appareil suivant l'une quelconque des revendications 1 à 6, caractérisé en ce que les inducteurs (10a,10b) étant rapprochés les uns des autres, ils sont connectés de façon que le courant circule en sens inverse dans deux inducteurs voisins.

8. Appareil suivant l'une quelconque des revendications 1 à 7, caractérisé en ce que la distance entre les inducteurs (10a, 10b) des deux rangées est réglable en fonction du diamètre des récipients à chauffer.

## Claims

1. Apparatus for cooking shallow dishes such as omelettes, quiches or the like, comprising an endless conveyor (2) on which metal receptacles designed to receive separate portions of the said dish are mounted at even distances apart, and means for heating the said receptacles, characterised in that the endless conveyor (2) is made from an insulating material capable of withstanding temperatures of approximately 200 degrees, in that the said heating means consist of inductors (10a, 10b) disposed underneath the top run (6) of the said conveyor, the said inductors having a diameter roughly equal to half the diameter of the receptacles and being disposed in at least two rows in the direction of movement of the conveyor (2) symmetrically with respect to the median axis of the receptacles (X-X) in the direction of movement of the belt, the adjacent edges of the rows of inductors (10a, 10b) being located beyond a vertical plane containing the said median axis of the receptacles (7) so as to ensure homogeneous heating of the said receptacles.

2. Apparatus according to claim 1, characterised in that the said conveyor comprises a belt and in that the said receptacles (7) consist of pans fixed by their bottoms to the conveyor belt by small columns (8) each connected to the bottom of a pan and passing through the material of the said conveyor belt (2), a gap (9) being provided between the bottom of each pan (7) and the surface of the conveyor belt (2).

3. Apparatus according to one of claims 1 and 2, characterised in that each of the receptacles is provided on its edge with an external coating (11) which is a good conductor of electricity.

4. Apparatus according to claim 3, characterised in that the said coating (11) which is a good conductor of electricity is a silver brazing alloy.

5. Apparatus according to one of claims 1 to 4, characterised in that the inductors (10a, 10b) are connected in series in groups, and in that the groups of inductors (10a, 10b) connected in series are connected in parallel to an AC power supply.

6. Apparatus according to any one of claims 2 to 5, characterised in that the conveyor belt (2) is made from a flexible material which withstands high temperatures of the order of 200°C.

7. Apparatus according to any one of claims 1 to 6, characterised in that, the inductors (10a, 10b) being close to one another, they are so connected that the current flows in opposite directions in two adjacent inductors.

8. Apparatus according to any one of claims 1 to 7, characterised in that the distance between the inductors (10a, 10b) in the two rows is adjustable in accordance with the diameter of the receptacles to be heated.

## Patentansprüche

1. Vorrichtung zum Kochen von Speisen geringer Dicke, wie etwa Omeletten, Quiches und dergleichen, mit einem Endlostransportgerät (2), auf dem in regelmäßigen Abständen Metallbehälter montiert sind, die dazu bestimmt sind, getrennte Portionen der Speise aufzunehmen, und mit Heizvorrichtungen für die Behälter, dadurch gekennzeichnet, daß das Endlostransportgerät (2) aus isolierendem Material besteht, das geeignet ist, Temperaturen um etwa 200 Grad auszuhalten, und daß die Heizvorrichtungen aus Induktoren (10a, 10b) bestehen, die über dem oberen Ende (6) des Transportgeräts angeordnet sind, wobei die Induktoren einen Durchmesser besitzen, der etwa gleich der Hälfte des Durchmessers der Behälter ist, und in wenigstens zwei Reihen in der Bewegungsrichtung des Transportgeräts (2) symmetrisch bezüglich der Mittelachse (X-X) der Behälter in Bewegungsrichtung des Transportgeräts angeordnet sind, wobei die benachbarten Ränder der Induktorenreihen (10a, 10b) sich jenseits einer vertikalen Ebene befinden, die diese Mittelachse der Behälter enthält, um so ein homogenes Aufheizen der Behälter sicherzustellen.

2. Vorrichtung nach Anspruch 1, dadurch gekennzeichnet, daß das Transportgerät ein Band umfaßt uni daß die Behälter (7) aus Pfannen bestehen, die an ihrer Unterseite mittels Pfosten (8), die jeweils an das Transportband (2) befestigt sind und das Material des Transportbandes (2) durchqueren, wobei ein Intervall (9) zwischen der Unterseite jeder Pfanne (7) und der Oberfläche des Transportbandes (2) vorgesehen ist.

3. Vorrichtung nach einem der Ansprüche 1 und 2, dadurch gekennzeichnet, daß jeder der Behälter an seinem Rand mit einer äußeren Verkleidung (11) versehen ist, die ein guter elektrischer Leiter ist.

4. Vorrichtung nach Anspruch 3, dadurch gekennzeichnet, daß die elektrisch gut leitende Verkleidung (11) eine Silberlötfläche ist.

5. Vorrichtung nach einem der Ansprüche 1 bis 4, dadurch gekennzeichnet, daß die Induktoren (10a, 10b) gruppenweise in Reihe geschaltet sind und daß die in Reihe geschalteten Induktorengruppen (10a, 10b) parallel an eine Wechselstromversogungsspannungsquelle angeschlossen sind.

6. Vorrichtung nach einem der Ansprüche 2 bis 5, dadurch gekennzeichnet, daß das Transportband (2) aus einem flexiblen Material besteht, daß erhöhten Temperaturen in der Größenordnung von 200°C standhält.

7. Vorrichtung nach einem der Ansprüche 1 bis 6, dadurch gekennzeichnet, daß die induktoren (10a, 10b) einander benachbart sind und daß sie derart miteinander verbunden sind, daß der Strom in zwei benachbarten Induktoren in umgekehrter Richtung fließt.

8. Vorrichtung nach einem der Ansprüche 1 bis 7, dadurch gekennzeichnet, daß der Abstand zwischen den Induktoren (10a, 10b) der beiden Reihen als Funktion des Durchmessers der zu erhitzenden Behälter regelbar ist.

EP 0 320 337 B1

# FIG.1

# FIG.2

FIG_3

FIG_4